# EUROPÄISCHE PATENTSCHRIFT

(11) **EP 1 878 600 B1**
(45) Veröffentlichungstag und Bekanntmachung des Hinweises auf die Patenterteilung: **16.11.2011**
(21) Anmeldenummer: 07012606.5
(22) Anmeldetag: 27.06.2007
(51) Int. Cl.: B60J 1/20

(54) **Fensterrollo eines Fahrzeugseitenfensters**
Roller blind for a motor vehicle side window
Store pour une fenêtre latérale de véhicule

(30) Priorität: 27.06.2006 DE 102006029452
(43) Veröffentlichungstag der Anmeldung: 16.01.2008
(73) Patentinhaber: HS Products Engineering GmbH, 82239 Alling (DE)
(72) Erfinder: Ziegenbein, Werner, 81929 München (DE)
(74) Vertreter: Kuhlmann, Kai

(56) Entgegenhaltungen:
- EP-A- 1 645 448
- DE-A1- 19 834 777
- FR-A- 2 878 558

## Beschreibung

Die Erfindung betrifft ein Fensterrollo eines Fahrzeugseitenfensters nach dem Oberbegriff des Patentanspruches 1.

Ein derartiges aus DE 10 2004 049 167 A1 (EP 1 645 448 A1) bekanntes Fensterrollo besitzt eine Rollobahn, welche zum Abdecken des Fahrzeugseitenfensters zum Bedecken des Fahrzeugfensters von einer Rollowelle, welche in der Nähe der unteren Fensterbegrenzung angeordnet ist, abgewickelt werden kann. Hierzu wirkt an einem ausziehbaren Rollobahnende, welches in Form eines Auszugstabs starr ausgebildet sein kann, eine Auszugskraft. Diese Auszugskraft wird über wenigstens einen entlang der Rollobahn in Bewegungsrichtung geführten Schlitten, welcher von einer Antriebseinrichtung angetrieben wird, auf das Rollobahnende übertragen. Zum Aufwickeln der Rollobahn auf die Rollowelle wird über die angetriebene Rollowelle eine Einzugskraft ausgeübt. Die Führungsstrecke, entlang welcher der wenigstens eine Schlitten von der Antriebseinrichtung angetrieben geführt wird, ist an ihrem oberen Ende und an ihrem unteren Ende durch am Fahrzeug vorgegebene Abmessungen im Bereich der oberen und unteren Fensterkanten begrenzt. Dies kann dazu führen, dass zwischen der oberen Fensterbegrenzungskante und dem ausgezogenen Rollobahnende ein offener Spalt verbleibt. Ferner kann bei vollständig auf der Rollowelle aufgewickelter Rollobahn das ausziehbare Rollobahnende über der unteren Fensterbegrenzungskante noch geringfügig überstehen.

Aufgabe der Erfindung ist es, ein Fensterrollo der eingangs genannten Art zu schaffen, bei welchem ein vollständiges Abdecken des Seitenfensters bei ausgezogener Rollbahn und ein überstandsfreies Aufwickeln der Rollobahn auf die Rollowelle erreicht wird.

Diese Aufgabe wird erfindungsgemäß durch die Merkmale des Patentanspruches 1 gelöst.

Die Unteransprüche beinhalten vorteilhafte Weiterbildungen der Erfindung.

Bei der Erfindung ist das ausziehbare Rollobahnende in Richtung der Einzugskraft und Auszugskraft federnd im Schlitten gelagert. In bevorzugter Weise wirkt die hierzu zwischen dem Rollobahnende und dem Schlitten vorgesehene Feder bei aufgewickelter Rollobahn entgegen der über die Rollowelle übertragene Einzugskraft als federnd nachgiebige Druckfeder, welche bei vollständig aufgewickelter Rollobahn komprimiert ist und bei vollständig abgewickelter Rollobahn übt sie in der obersten Schlittenposition eine zusätzliche Auszugsbewegung auf das Rollobahnende aus, wobei die zusätzliche Auszugsbewegung durch die obere Fensterbegrenzung begrenzt werden kann.

Hierdurch ist gewährleistet, dass bei ausgezogener Rollobahn die Fensterfläche im Bereich der oberen Fensterbegrenzungskante vollständig abgedeckt wird und bei eingezogener Rollobahn das ausziehbare Rollobahnende vollständig unter die untere Fensterbegrenzungskante durch die über die Rollowelle wirkende Einzugskraft zurückgezogen wird. Vorhandene Einbautoleranzen werden dadurch kompensiert.

In erfindungsgemäßer Weise ist die Feder als zylindrische Schraubenfeder ausgebildet. Zur Führung der Schraubenfeder dient ein den Federumfang umgebender Topf, dessen Inneres an den zylindrischen Federumfang angepasst ist und ein in das Federinnere ragender Führungszapfen, welcher ebenfalls an den zylindrischen Federinnenraum an seiner Außenfläche angepasst ist. Der Haltezapfen kann an einem Lager, an welchem das Rollobahnende gelagert ist, und der Topf am Schlitten befestigt sein. Es ist auch die umgekehrte Anordnung möglich, bei welcher der Topf am Lager des Rollobahnendes und der Haltezapfen am Schlitten vorgesehen sind.

In vorteilhafter Weise kann zwischen dem Schlitten und der Rollowelle eine federnde Vorspannkraft wirken, weiche beim Abwickeln und Aufwickeln der Rollobahn für eine straffe Führung der Rollobahn sorgt. Eine derartige federnde Vorspannkraft ist aus DE 10 2004 049 167 A1 (EP 1 645 448 A1) bekannt. Ferner kann die Rollowelle entlang ihrer Wellenachse verschiebbar gelagert sein, sodass ein einwandfreies, faltenfreies Auf- und Abwickeln der Rollobahn auch bei unterschiedlichen Rollobahnbreiten in Auszugs- bzw. Einzugsrichtung erreicht wird.

Anhand der Figuren wird an einem Ausführungsbeispiel die Erfindung noch näher erläutert.

Es zeigt
- Fig. 1: ein Ausführungsbeispiel der Erfindung in Seitenansicht;
- Fig. 2: in vergrößerter Darstellung die Verbindung eines Schlittens mit einer Seite des ausziehbaren Rollobahnendes im Bereich A in Fig. 1; und
- Fig. 3: ein Ausführungsbeispiel für eine zwischen Schlitten und Rollowelle wirkende federelastische Ausgleichseinrichtung im Bereich eines Rollowellenendes.

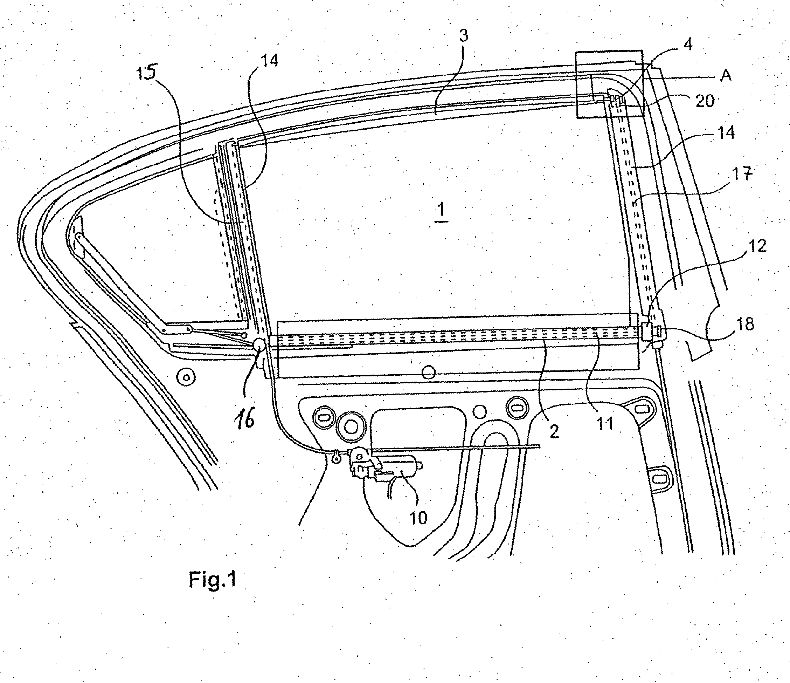

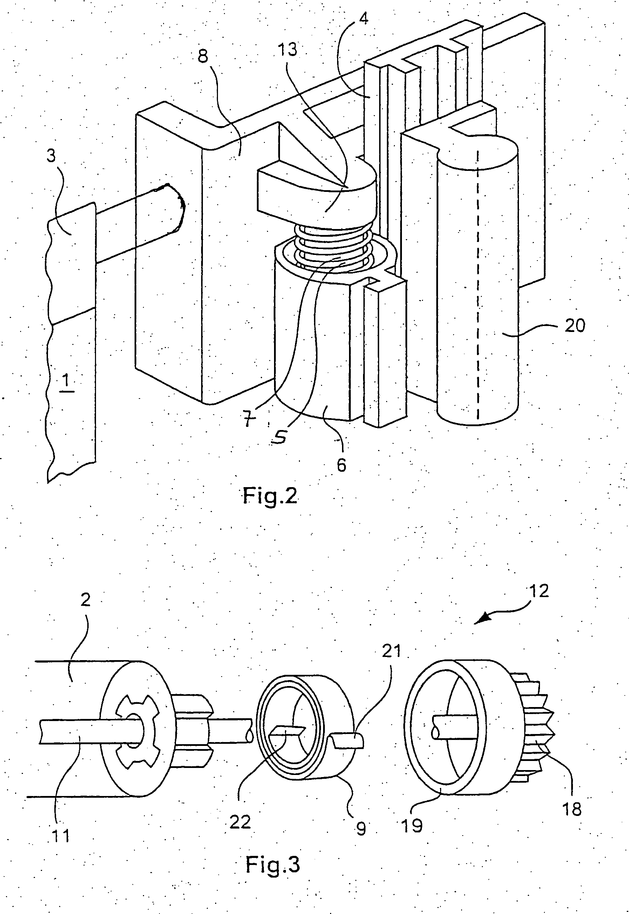

Das in Fig. 1 dargestellte Ausführungsbeispiel weist eine Rollobahn 1 auf, weiche auf eine Rollowelle 2 aufgewickelt werden kann und von der Rollowelle 2 abgewickelt werden kann. Beim dargestellten Ausführungsbeispiel ist die Rollobahn 1 von der Rollowelle 2 abgewickelt und ein ausziehbares Rollobahnende 3 befindet sich an einer oberen Fensterbegrenzungskante eines Fahrzeugseitenfensters. In dieser Position wird das Fahrzeugfenster vollständig von der Rollobahn 1 abgedeckt. Das ausziehbare Rollobahnende 3 ist in bekannter Weise als Auszugsstab ausgebildet, wodurch das Rollobahnende 3 im wesentlichen über die gesamte Breite der Rollobahn 1 starr ausgebildet ist. Das ausziehbare Rollobahnende 3 ist an seinen beiden Seiten in Schlitten 4 gelagert. Die Verbindung zwischen dem Rollobahnende 3 und einem der beiden Schlitten 4 (an der rechten Seite der Rollobahn 1) ist in vergrößerter Darstellung in Fig. 2 gezeigt. Die Schlitten 4 werden in Schlittenführungen 14, welche sich in Rollobahnbewegungsrichtungen erstrecken, geführt.

Der Schlitten 4 ist bei diesem Ausführungsbeispiel mit einem oberen Ende eines Antriebsüberträgungsmittels, beispielsweise eines' Bürstenkabels 15 oder 17 verbunden. Das ausziehbare Rollobahnende 3 ist in einem Lager 8 schwenkbar gelagert. Das Lager 8 ist am Schlitten 4 über eine Feder 5, welche beim Ausführungsbeispiel als zylindrische Schraubenfeder ausgebildet ist, beweglich abgestützt. Die Bewegungsrichtung des Lagers 8 und damit des Rollobahnendes 3 gegenüber dem Schlitten 4 entspricht der Auszugs- bzw. Einzugsrichtung der Rollobahn 1. Die Bewegungsrichtung des Lagers 8 gegenüber dem Schlitten 4 ist bei dem in der Fig. 2 dargestellten Ausführungsbeispiel durch eine Führungseinrichtung, mit welcher auch die Bewegungsrichtung der Feder 5 festgelegt ist, bestimmt. Hierzu ist ein am Schlitten 4 befestigter Topf 6 vorgesehen, in welchem die Feder 5 angeordnet ist. Das Topfinnere ist an den äußeren zylindrischen Federumfang angepasst. In das Federinnere ragt ein am Lager 8 befestigter Lagerzapfen 7, dessen Außenumfang an den zylindrischen Innenumfang der Feder 5 angepasst ist. Zwischen der zylindrischen Außenfläche des Lagerzapfens 7 und der zylindrischen Innenfläche des Topfes 6 ist die Feder 5, welche als zylindrische Schraubenfeder ausgebildet ist, angeordnet. Die zylindrische Schraubenfeder stützt sich am oberen Ende des Lagerzapfens 7, beispielsweise an einem Halter 13 des Lagerzapfens 7 und an ihrem unteren Ende am Boden des Topfes 6 ab. Das Rollobahnende 3. ist schwenkbar im Lager 8 gelagert. Zur linearen Bewegungsführung des Lagers 8 am Schlitten 4 kann noch eine separate Linearführung vorgesehen sein.

Eine derartige Verbindung zwischen dem Schlitten 4 und dem Rollobahnende 3 kann an beiden Seiten des Rollobahnendes 3 vorgesehen sein.

Die zum Ausziehen und Einziehen der Rollobahn 1 erforderlichen Kräfte werden von einer Antriebseinrichtung 10, beispielsweise einem elektrischen Gleichstrommotor gebildet. Das Antriebsdrehmoment der Antriebseinrichtung 10 wird über ein Bürstenkabel oder- ein gleichwirkendes flexibles Schub-/Zugelement, beispielsweise gelochtes Band auf ein Getriebe 16 übertragen. Das Getriebe 16 kann als Schneckenradgetriebe oder Kegelradgetriebe ausgebildet sein, von welchem ein Schneckenrad oder Kegelrad drehfest auf einer Antriebswelle 11 sitzt, welche durch einen Hohlraum der Rollowelle 2 sich erstreckt. Das Getriebe 16 ist am linken Ende der Antriebswelle 11 vorgesehen. Am rechten, über die Rollowelle 2 ragenden Wellenende befindet sich ein in ein zweites Bürstenkabel 17 oder ähnlich wirkendes Schub-/Zugelement eingreifendes Antriebsrad 18. Das Antriebsrad 18 ist drehfest mit der Antriebswelle 11 verbunden. Zwischen dem Antriebsrad 18 und der Rollowelle 2 befindet sich eine federelastische Ausgleichseinrichtung 12, welche zwischen dem Bürstenkabel und dem mit einem oberen Bürstenkabelende 20 verbundenen Schlitten 4 und der Rollowelle 2 eine federnde Vorspannung erzeugt. Durch diese federnde Vorspannung wird beim Ausziehen und beim Einziehen der Rollobahn 1 diese die Rollobahn glättende Vorspannung erzeugt. Gleichzeitig wird hierdurch eine Kompensation des sich ändernden Wickeldurchmessers der auf die Rollowelle 2 aufgewickelten Rollobahn erreicht. Beim dargestellten Ausführungsbeispiel ist der rechte Schlitten 4 mit dem Bürstenkabel 17 und der linke Schlitten 4 mit dem Bürstenkabel 15 verbunden. Die Verbindung mit den oberen Bürstenkabelenden 20 erfolgt in der Weise, wie es beispielsweise in Fig. 2 dargestellt ist. Anstelle der Büstenkabel können auch Seilzüge oder auch andere an sich bekannte Antriebsformen (US 6,086,133) zur Anwendung kommen.

Beim Abwickeln der Rollobahn 1 von der Rollowelle 2 wird das von der Antriebseinrichtung 10 erzeugte Drehmoment über die Bürstenkabel 15 und 17 auf die Schlitten 4, wie erläutert, übertragen. Die nach oben bewegten Schlitten 4 üben entsprechende Auszugskräfte auf das ausziehbare Rollobahnende 3 aus und gelangen in die in der Fig. 1 dargestellten oberen Auszugspositionen. In diesen Positionen wird das ausziehbare Rollobahnende 3 durch die Federn 5 nach oben gedrückt, sodass das ausziehbare Rollobahnende 3 entlang seiner gesamten Länge bzw. entlang der gesamten oberen Rollobahnbreite an der oberen Fensterbegrenzungskante anliegt. Auf diese Weise wird auch im oberen Fensterbereich ein vollständiges Abdecken der Fensterfläche erreicht.

Um die Rollobahn 4 in die aufgewickelte Position zurückzubewegen, wird die Antriebseinrichtung 14 in zur Auszugsrichtung umgekehrter Richtung gedreht, sodass mittels der Bürstenkabel 15 und 17 die Schlitten 4 in die unteren Positionen zurückbewegt werden. Gleichzeitig wird die Rollowelle 2 in Bahneinzugsrichtung gedreht, sodass auf die Rollobahn 1 von der Rollowelle 2 eine Einzugskraft ausgeübt wird. Die Schlitten 4 werden bis in ihre unteren Endpositionen in ihren Schlittenführungen 14 bewegt. Um ein vollständiges Einziehen des Rollobahnendes 3 zu erreichen, wirkt die von der Rollowelle 2 vermittelte Einzugskraft weiterhin auf die Rollobahn 1, wobei die Federn 5 als federnd nachgiebige Druckfedern wirken und beim vollständigen Zurückziehen des Rollobahnendes 3 unter die untere Fensterbegrenzungskante komprimiert werden.

Die am rechten Rollowellenende vorgesehene federelastische Ausgleichseinrichtung 12 beinhaltet in vorteilhafter Weise, wie aus Fig. 3 zu ersehen ist, eine Spiral- oder Rollfeder 9. Ein äußeres Federende 21 ist mit einer Federkassette 19, in welcher die Spiral- oder Rollfeder 9 angeordnet ist, fest verbunden. Die Federkassette 19 kann drehfest mit der Rollowelle 2 verbunden sein. Ein inneres Federende 22 kann dann drehfest mit dem Antriebsrad 18 oder der Antriebswelle 11 verbunden sein. Es ist jedoch auch möglich, wie in Fig. 3 gezeigt, die Federkassette 19 drehfest mit der Antriebswelle 11 oder dem Antriebsrad 18 zu verbinden und das innere Federende 22 drehfest mit der Rollowelle 2 zu verbinden. Die Rollowelle 2 kann, wie es beispielsweise aus DE 20 2004 000 631 A1 bekannt ist, in axialer Richtung gegenüber der Antriebswelle 11 verschiebbar sein, um unterschiedliche Breiten des Rollobahnzuschnittes beim Auf- und Abwickeln auszugleichen.

### Bezugszeichenliste

- 1: Rollobahn
- 2: Rollowelle
- 3: Rollobahnende (Auszugstab)
- 4: Schlitten
- 5: Feder (Schraubenfeder)
- 6: Topf
- 7: Lagerzapfen
- 8: Lager des Rollobahnendes
- 9: Spiral- oder Rollfeder
- 10: Antriebseinrichtung
- 11: Antriebswelle
- 12: federelastische Ausgleichseinrichtung
- 13: Halter
- 14: Schlittenführungen
- 15: Bürstenkabel
- 16: Getriebe
- 17: Bürstenkabel
- 18: Antriebsrad
- 19: Federkassette
- 20: oberes Bürstenkabelende
- 21: äußeres Federende
- 22: inneres Federende

## Patentansprüche

1. Fensterrollo eines Fahrzeugseitenfensters mit einer Rollobahn (1), auf deren ausziehbares Rollobahnende (3) über wenigstens einen entlang der Rollobahnbewegungsrichtung geführten Schlitten (4) eine Auszugskraft übertragen wird, und auf welche beim Aufwickeln eine Einzugskraft über die Rollowelle (2) übertragen wird, **dadurch gekennzeichnet, dass** das ausziehbare Rollobahnende (3) in Richtung der Auszugsund der Einzugskraft mittels wenigstens einer Feder (5) im Schlitten (4) federnd gelagert ist, und dass das das Fensterrollo derart ausgestaltet ist, dass das ausziehbare Rollobahnende (3) im eingebauten Zustand bei eingezogener Rollobahn (1) vollständig unter eine Fensterbegrenzungskante des Fahrzeugseitenfensters durch die über die Rollowelle (2) wirkende Einzugskraft zurückgezogen wird und die Feder (5) bei vollständig aufgewickelter Rollobahn (1) komprimiert ist, wobei die Feder (5) an einem an den äußeren Federumfang angepassten Topf (6) und innen von einem an den Federinnenraum angepassten Haltezapfen (7) gehalten ist und zwischen dem Haltezapfen (7) und dem Innenraum des Topfes (6) ein hohlzylindrischer Zwischenraum gebildet ist, in welchem die als zylindrische Schraubenfeder ausgebildete Feder (5) angeordnet ist und wobei in der obersten Position des Schlittens (4), in der die Rollobahn (1) im Wesentlichen vollständig ausgezogen ist, durch die Feder (5) eine zusätzliche Auszugsbewegung auf das ausziehbare Rollobahnende (3) ausgeübt werden kann.

2. Fensterrollo nach Anspruch 1 oder 2, **dadurch gekennzeichnet, dass** der Topf (6) am Schlitten (4) und der Haltezapfen (7) an einem am Schlitten (4) linear beweglich gelagerten Lager (8) des Rollobahnendes (3) oder der Topf (6) am Lager (8) des Rollobahnendes (3) und der Haltezapfen am Schlitten (4) vorgesehen sind.

3. Fensterrollo nach einem der Ansprüche 1 bis 3, **dadurch gekennzeichnet, dass** die Feder (5) bei auf der Rollowelle (2) aufgewickelter Rollobahn (1), durch die von der Rollowelle (2) auf die Rollobahn (1) ausgeübte Einzugskraft komprimierbar ist.

4. Fensterrollo nach einem der Ansprüche 1 bis 4, **dadurch gekennzeichnet, dass** zwischen dem Schlitten (4) und der Rollowelle (2) eine federelastische Ausgleichseinrichtung (12) angeordnet ist, welche zwischen dem Schlitten (4) und der Rollowelle (2) eine federnde Vorspannung erzeugt.

5. Fensterrollo nach Anspruch 4 **dadurch gekennzeichnet, dass** die federelastische Ausgleichseinrichtung (12) eine Spiral- oder Rollfeder aufweist.

6. Fensterrollo nach Anspruch 5, **dadurch gekennzeichnet, dass** die Spiral- oder Rollfeder (9) zwischen einer von einer Antriebsvorrichtung (10) angetriebenen Antriebswelle (11), über welche der wenigstens eine Schlitten (4) angetrieben wird, und der Rollowelle (2) angeordnet ist.

## Claims

1. A roller blind of a vehicle side window with a roller blind web (1), to the extensible end (3) of which a pull-out force is transmitted by way of at least one slide (4) guided along the direction of movement of the roller blind and to which a pull-in force is transmitted by way of a roller blind tube (2) during the winding up, **characterized in that** the extensible end (3) of the roller blind web (1) is mounted in the slide (4) in a springing manner by means of at least one spring (5) in the direction of the pull-out and the pull-in forces, and the roller blind is designed in such a way that, in the fitted state and when the roller blind web (1) is pulled in, the extensible end (3) of the roller blind web (1) is retracted completely below a boundary edge of the vehicle side window by the pull-in force acting by way of the roller blind tube (2), and, when the roller blind web (1) is completely wound up, the spring (5) is compressed, wherein the spring (5) is held on a cup (6) adapted to the external periphery of the spring and on the inside by a holding pin (7) adapted to the interior space of the spring (5), and a hollow cylindrical intermediate space, in which the spring (5) designed in the form of a cylindrical helical spring is arranged, is formed between the holding pin (7) and the interior space of the cup (6), and wherein an additional pull-out movement can be exerted upon the extensible end (3) of the roller blind web (1) by the spring (5) in the uppermost position of the slide (4) in which the roller blind web (1) is pulled out substantially completely.

2. A roller blind according to Claim 1, **characterized in that** the cup (6) is provided on the slide (4) and the holding pin (7) is provided on a bearing (8) of the extensible end (3) of the roller blind web (1) mounted on the slide (4) so as to be movable in a linear manner or the cup (6) is provided on the bearing (8) of the extensible end (3) of the roller blind web (1) and the holding pin (7) is provided on the slide (4).

3. A roller blind according to Claim 1 or 2, **characterized in that** when the roller blind web (1) is wound up on the roller blind tube (2), the spring (5) is capable of being compressed by the pull-in force exerted by the roller blind tube (2) upon the roller blind web (1).

4. A roller blind according to any one of Claims 1 to 3, **characterized in that** a spring-resilient compensating device (12), which produces a springing pre-stressing between the slide (4) and the roller blind tube (2), is arranged between the slide (4) and the roller blind tube (2).

5. A roller blind according to Claim 4, **characterized in that** the spring-resilient compensating device (12) has a spiral or scroll spring.

6. A roller blind according to Claim 5, **characterized in that** the spiral or scroll spring (9) is arranged between a drive shaft (11), which is driven by a drive apparatus (10) and by way of which the at least one slide (4) is driven, and the roller blind tube (2).

## Revendications

1. Store de fenêtre d'une fenêtre latérale de véhicule, avec une bande de store (1) sur l'extrémité déployable (3) de laquelle une force de déploiement est transmise au moyen d'au moins un coulisseau (4) guidé le long du sens de déplacement de la bande de store, et sur laquelle une force de rétraction est transmise lors de l'enroulement au moyen de l'arbre de store (2), **caractérisé en ce que** l'extrémité déployable (3) de la bande de store est montée sur ressort dans le coulisseau (4) dans la direction de la force de déploiement et de la force de rétraction au moyen d'au moins un ressort (5), et **en ce que** le store de fenêtre est conçu de telle sorte que l'extrémité déployable (3) de la bande de store est, dans l'état installé, lorsque la bande de store (1) est rentrée, entièrement rétractée sous une arête de délimitation de fenêtre de la fenêtre latérale de véhicule par la force de rétraction agissant au moyen de l'arbre de store (2), et que le ressort (5) est comprimé lorsque la bande de store (1) est entièrement enroulée, sachant que le ressort (5) est maintenu dans un logement (6) adapté à la périphérie extérieure du ressort, et intérieurement par un tourillon de maintien (7) adapté à l'espace intérieur du ressort, et qu'un espace intermédiaire cylindrique creux est formé entre le tourillon de maintien (7) et l'intérieur du logement (6), espace dans lequel est disposé le ressort (5) réalisé sous forme de ressort hélicoïdal cylindrique, et sachant que, dans la position la plus haute du coulisseau (4), dans laquelle la bande de store (1) est sensiblement entièrement déployée, un mouvement de déploiement supplémentaire peut être exercé sur l'extrémité déployable (3) de la bande de store par le ressort (5).

2. Store de fenêtre selon la revendication 1, **caractérisé en ce que** le logement (6) est prévu sur le coulisseau (4) et le tourillon de maintien (7) sur un palier (8) de l'extrémité (3) de la bande de store qui est monté à déplacement linéaire sur le coulisseau (4), ou bien le logement (6) est prévu sur le palier (8) de l'extrémité (3) de la bande de store et le tourillon de maintien sur le coulisseau (4).

3. Store de fenêtre selon la revendication 1 ou 2, **caractérisé en ce que** le ressort (5), lorsque la bande de store (1) est enroulée sur l'arbre de store (2), peut être comprimé par la force de rétraction exercée par l'arbre de store (2) sur la bande de store (1).

4. Store de fenêtre selon l'une des revendications 1 à 3, **caractérisé en ce qu'**un organe de compensation (12) à élasticité de ressort est prévu entre le coulisseau (4) et l'arbre de store (2), organe qui produit une précontrainte élastique entre le coulisseau (4) et l'arbre de store (2).

5. Store de fenêtre selon la revendication 4, **caractérisé en ce que** l'organe de compensation (12) à élasticité de ressort présente un ressort spiral ou un ressort à col de cygne.

6. Store de fenêtre selon la revendication 5, **caractérisé en ce que** le ressort spiral ou à col de cygne (9) est disposé entre l'arbre de store (2) et un arbre menant (11) qui est entraîné par un dispositif d'entraînement (10) et au moyen duquel est entraîné le coulisseau au moins unique (4).
